# EUROPÄISCHE PATENTSCHRIFT

(11) **EP 0 460 136 B1**
(45) Veröffentlichungstag und Bekanntmachung des Hinweises auf die Patenterteilung: **01.06.1994**
(21) Anmeldenummer: 90917717.2
(22) Anmeldetag: 11.12.1990
(51) Int. Cl.: B64G 6/00, B64D 10/00

(54) **SCHUTZANZUGSYSTEM FÜR PILOTEN VON LUFT- UND RAUMFAHRZEUGEN, INSBESONDERE FÜR HOHE BESCHLEUNIGUNGEN**
PROTECTIVE CLOTHING SYSTEM FOR PILOTS OF AIR AND SPACE-CRAFT, ESPECIALLY FOR HIGH RATES OF ACCELERATION
SYSTEME DE VETEMENT DE PROTECTION POUR PILOTES D'AERONEFS ET SPATIONEFS, EN PARTICULIER POUR ACCELERATIONS ELEVEES

(30) Priorität: 18.12.1989 DE 3941684
(43) Veröffentlichungstag der Anmeldung: 11.12.1991
(73) Patentinhaber: DORNIER LUFTFAHRT GMBH, D-82234 Wessling (DE)
(72) Erfinder: GEHSE, Hartmut, D-7778 Markdorf (DE)
(74) Vertreter: Frick, Gerhard, Dipl.-Ing.
(86) Internationale Anmeldenummer: DE9000948
(87) Internationale Veröffentlichungsnummer: WO9108950

(56) Entgegenhaltungen:
- EP-A- 0 264 652
- EP-A- 0 317 415
- DE-A- 1 249 698
- FR-A- 2 395 890

## Beschreibung

Die Erfindung betrifft ein Schutzanzugsystem nach dem Oberbegriff des Anspruches 1.

Piloten, z.B. moderner Kampfflugzeuge, Astronauten, aber auch Fahrer von gepanzerten Fahrzeugen, sind in besonderem Maße extremen thermischen Lasten ausgesetzt, wobei im Falle der Piloten und Astronauten noch hohe Beschleunigungskrälfte hinzu kommen. Zur sicheren Durchführung der Einsatzaufgaben ist deshalb eine Schutzausrüstung erforderlich, die den Einsatzbedingungen Rechnung trägt.

Dabei ist in besonderem Maße die Ausführung und Materialwahl für derartige Schutzausrüstungen im Hinblick auf den Konflikt zwischen Isolation und Durchlässigkeit beim Einsatz zu berücksichtigen.

Beeinträchtigt die Schutzausrüstung die Thermoregulation des Körpers der Trägerperson im Sinne einer nicht ausgeglichenen Wärmebilanz, so treten zusätzliche, die Leistungsfähigkeit der Trägerperson herabsetzende Belastungen auf.

Bekannte Schutzausrüstungen für Piloten von Kampfflugzeugen erfordern zum Schutz gegen sämtliche schädlichen Einflüsse eine entsprechende Anzahl von getrennten, einzeln gemeinsam zu tragenden Ausrüstungskomponenten, wie Anti-G-Hosen, Schwimmwesten, Druckwesten, Kühlwesten und ABC-Schutzkomponenten.

Solche Ausrüstungskomponenten bedecken große Teile des Körpers und erschweren dadurch den trockenen Wärmeaustausch und machen den feuchten Wärmeaustausch weitgehend unmöglich.

Bei herkömmlichen Systemen wird zur Bereitstellung für die Piloten, insbesondere von Militärflugzeugen oder auch für Astronauten das benötigte Atemgas durch eine Mischung aus Sauerstoff und Kabinenluft über Atemmasken gebildet.

Dazu wird der Sauerstoff in flüssigem oder gasförmigem Zustand mitgeführt. Das zur Bildung des Atemgases erforderliche Mischungsverhältnis von Sauerstoff und Kabinenluft wird durch Atemregler in Abhängigkeit von der Kabinendruckhöhe bestimmt.
Bekannt sind auch Bemühungen, die nicht befriedigende Wärmeabfuhr unter Kontaktflächen zwischen dem Körper, z.B. von Piloten (Sitz- und Rückenlehne), mittels Luffdurchströmung nur durch einen in Rohrleitungen geführten Flüssigkeitsstrom zu ersetzen. Viele Vorteile der Luftkühlung wurden dabei aufgegeben.

Aus der EP-A- 0 264 652 ist ein Schutzanzug für den Gebrauch in Flugzeugen oder Raumfahrzeugen bekannt geworden, bei dem der Zwischenraum zwischen der Schutzanzughülle und dem Träger in zwei voneinander getrennte Kammern geteilt ist. Die Kammern werden über getrennte Anschlüsse unter Verwendung von voneinander unabhängigen Reglern ventiliert. Das verbrauchte Gas wird über Auslaßventile an die Umgebung abgegeben und nicht wiederaufbereitet.

Gegenüber den bekannten Lösungen der Ausführung einer Schutzausrüstung ist es Aufgabe der vorliegenden Erfindung, ausgehend von einem mittels Luft durchströmten Schutzanzug, ein Anzugssystem zu schaffen, daß eine ausreichende Klimatisierung für den Träger der Schutzausrüstung durch Erzeugung eines körpernahen Mikroklimas in Verbindung mit einem G-Schutz und Unterstützung der Überdruckbeatmung ermöglicht.

Aufgabe der Erfindung ist es ferner, durch eine verbesserte Atemgaszuführung im Kopfbereich des Piloten zur physischen Entlastung und damit Steigerung der körperlichen Leistungsfähigkeit neu zu gestalten, und zwar in Verbindung mit einer an sich bekannten OBOGS-Anlage (On Board Oxygen Generating System).

Die gestellte Aufgabe ist erfindungsgemäß durch die Merkmale des kennzeichnenden Teils des Anspruches 1 und in weiterer vorteilhafter Ausgestaltung nach den Merkmalen weiterer Ansprüche gelöst.

Die erfindungsgemäße Ausbildung des Schutzanzugssystems integriert mehrere Ausrüstungskomponenten.

Die äußere gas- und wasserdichte Anzugaußenhülle als Schutzschicht in Verbindung mit der inneren wasserdampfdurchlässigen Textilschicht (Klimaunterwäsche) ermöglicht durch zwischen den Schichten strömende, klimatisierte Luft, die vom Körper abgegebene Wärme und Feuchtigkeit aufzunehmen und nach außen abzutransportieren bzw. den Wärme- bzw. Feuchtigkeitshaushalt des Trägers zu regulieren.

Gemeinsam mit dem Helmbereich weist der Ganzkörper-Anti-G-Anzug in sich zwei weitere Bereiche innerhalb seiner Außenhülle auf, die getrennt voneinander mit einem temperierten Konstantdurchfluß von gefilterter Luft oder Atemgas versorgt werden.

Durch Drosselung oder Absperrung des Abluftstromes innerhalb der einzelnen getrennten Druckbereiche ist ein schneller Druckanstieg erreichbar. Durch eine konstante Durchflutung der Druckbereiche wird die Abfuhr von Körperwärme und Körperschweiß gewährleistet.

Der Helm ist ausgestattet mit einer integrierten Atemgaszuführung. Die Trägerperson atmet dabei aus dem zur Beschlagfreiheit des Visiers eingeblasenen Spülgasstrom. Als Spülgas wird Atemgas verwendet. Dabei ist das Atemgas so temperiert, daß die Wärmelast des Kopfes udn der austretende Körperschweiß abtransportiert wird.
Daraus ergibt sich, daß die Atemmaske entfällt und ein konstanter Durchfluß mit vereinfachter Regelung erreicht wird, verbunden mit der Abfuhr von Wärme und Feuchtigkeit.

Eine Kombination mit G-Schutz-Maßnahmen erfordert die Trennung des Schutzanzuges (Helm/Anzug) in zwei bzw. drei Druckbereiche. Dabei wird der "High"-G-Schutz durch den bedruckbaren, zusätzlcihen Hosenteil und die gleichzeitige getrennte Bedruckung von Helm-Atmosphäre und Brustdruckbereich sichergestellt.

Bei einer weiteren bevorzugten Ausführungsform ist vorgesehen, in den Druckbereich um den Brustkorb des Trägers eine mit dem Atemgassystem gekoppelte Druckweste unterschiedlicher Druckbeaufschlagung gegenüber dem Druckbereich des Schutzanzugssystems anzuordnen.

In der Zeichnung ist ein Ausführungsbeispiel des erfindungsgemäßen Schutzanzugssystems dargestellt. Das Ausführungsbeispiel ist anhand der Zeichnung nachfolgend beschrieben.

In der Zeichnung zeigt:
- Fig. 1: den Anzug in schematisierter, teilweise geschnittener Darstellung, in Verbindung mit in Form eines Blockschaltbildes gezeigten Anlageelementen,
- Fig. 2: in einem Teilsausschnitt aus Fig. 1 in vergrößertem Maßstab Einzelheiten der Ausbildung des Schutzanzuges und in
- Fig. 3: in einem Teilausschnitt aus Fig. 1 in vergrößertem Maßstab Einzelheiten der Ausbildung des Schutzanzuges eine weitere Ausführungsform.

Das in der Zeichnung dargestellte Schutzanzugsystem ist gebildet durch die druckdichte Außenhülle 3, den mit der Hülle 3 mittels einer flexiblen Abschluß- bzw. Verbindungsmanschette 6 versehenen Integral-Schutzhelm 2 und den druckdicht mit dem Anzug verbundenen Schuhen 21.

Zwischen dem Körper der Trägerperson und der Anzugaußenhülle 3 sind hier als Kammern 12 bzw. 13 bezeichnete Zwischenräume gebildet. Die Zwischenräume dienen, außer zur Führung eines gasförmigen Medium, was später noch näher erläutert ist, zur Aufnahme einer zur Klimatisierung dienenden Innenanzughülle , beispielsweise in der Art bekannter Klima-Unterwäschestücke.

Der mit der Anzugaußenhülle 3 über die flexible Halsmanschette 6 Bewegungen des Kopfes der Trägerperson zulassende Schutzhelm 2 weist einen gegenüber der Kammer 12 innerhalb der Außenhülle 3 des Anzuges 1 nach außen abgeschlossenen und einen Atemgaserzeuger angeschlossenen Innenraum 10 auf.

Für das Schutzanzugsystem mit seinem Helm 2 sind eine Anzahl von voneinander getrennt arbeitenden Durchström- bzw. Druckbereichen A, B und C vorgesehen. Dazu ist getrennt an den Helminnenraum 10 bzw. an die Kammern 12, 13 der Außenhülle 3 ein Atemgas bzw. ein gasförmiges Medium zur Durchströmung des Helminnenraumes 10 bzw. der Anzugkammern 12 und 13 unter vorgegbenen Druckverhältnissen erzeugendes Aggregat angeschlossen.

Das Aggregat 66 schließt eine Luftzuführung 65 bzw. 69 mit einem daran anschließenden, pneumatisch arbeitenden Kupplungselement 24 in Verbindung mit einem Klimatisierungssystem 64 mit Zu- bzw. Rückführungsleitungen 68 bzw. 70 ein.
An das als Kupplungselement bezeichnete Teil 24, welches die Luft- bzw. Atemgaszuführung und bzw. oder -ableitung regelt, schließen Hauptzuführungs. leitungen 26 bzw. Hauptrückströmleitungen 27 an.
Der Durchström- bzw. Druckbereich A schließt den Helm 2 bis zur Abschlußmanschette 6 ein. Mit dem Helm 2 ist ein Beatmungssystem 25 integriert. Das Beatmungssystem ist gebildet aus einem an die Zuleitung 26 des Kupplungselementes 24 anschließendes und in den Helminnenraum 10 mündendes Drosselriegelventil 38, sowie aus den ebenfalls mit dem Helm 2 integrierten Auslaßventilen 39 bzw. 41, deren Auslaß vom Helminnenraum 10 nach außen in den Innenraum der Kabine 9 mündet. Über das Kupplungselement 24 steht das Auslaßventil 41 mit einer Kontrolleinrichtung 42 (UCS-Utility Control System) elektrisch und pneumatisch mit der Umgebung in Verbindung.

Der Durchström- bzw. Druckbereich B schließt den Anzug 1 bzw. die Anzughülle 3 mit den Durchströmkammern 12 des Körperoberteiles bis zur Gürtellinie 51, wie später noch näher erläutert, ein. In die durch den Zwischenraum zwischen der Anzugaußenhülle 3 und dem Körper der Trägerperson gebildete Kammer 12 mündet im unteren Kammerbereich die Zuleitung 26 und im oberen Bereich der Kammer 12 die Rückleitung 27 für das Durchströmmedium. Zwischen der Kammer 12 des Schutzanzuges 1 und dem Klimasystem 64 ist zur Regelung der Durchströmmenge bzw. des Druckes ein Regelventil 31 eingesetzt.
Der Bereich B schließt ferner die Armteile 4 mit der Kammer 12 ein, die mit der Kammer 12 des Anzugoberteils einen Druckbereich bildet.

Die Kammer 12 des Anzuges ist im Bereich der Armteile 4 durch am Handgelenk der Trägerperson anliegende Dichtmanschetten 7 bzw. abdichtende Druckhandschuhe bekannter Bauart nach außen abgeschlossen, jedoch ist in der Nähe der Manschetten 7, für den Fall Durchströmung der Kammer 12, ein gedrosseltes Ausströmen des Mediums aus der Kammer 12 über Ausströmöffnungen 45 vorgesehen.

Der Durchström- bzw. Druckbereich C des Anzuges 1 schließt die Kammer 13 von der Gürtellinie 51 bis zum Fußbereich ein, der durch die mit dem Anzug 1 verbundenen Schuhe 21 druckdicht abgeschlossen ist.
Die Kammer 13 steht in der Nähe der Schuhe 21 mit der Zuleitung 26 und in der Nähe der Gürtellinie 51 mit der Rückstromleitung 27 in Verbindung. Zur Regelung der Durchströmung bzw. des Druckes in der Kammer 13 ist ein die Zu- und Ableitung 26 bzw. 27 einschließendes Regelventil 32 angeordnet.

Zur druckdichten Trennung der Kammern 12 bzw. 13 des Schutzanzugober- bzw. Schutzanzugunterteils (Bereich B bzw. C) ist innerhalb des Anzuges 1 ein Hosenteil 50 mit Beinteilen 52 vorgesehen. Das Hosenteil 50 ist in der Gürtellinie 51 bzw. den Bund 51' der Hose mittels einer Naht oder einer anderen Verbindungsart mit der Innenseite der Außenhülle 3 des Schutzanzuges druckdicht verbunden, so daß die Kammer 12 des Anzugoberteils und die Kammer 13 des Anzugunterteils druckdicht voneinander getrennt sind.
Dazu weisen die Hosenbeine 52 an den Beinöffnungen bzw. an den Hosenbeinenden Dichtmanschetten 55 auf, die über das Hosenteil 50 die Trennung der Druckbereiche B und C gewährleistet.

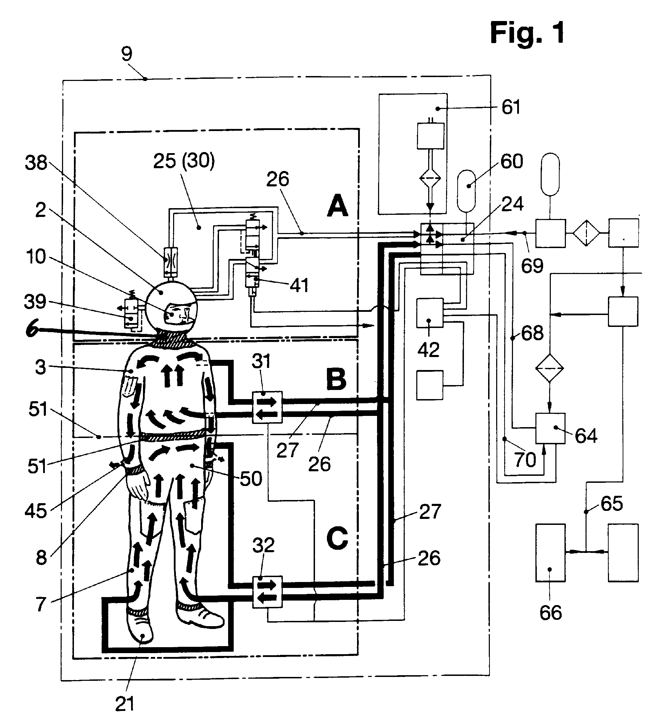

Gemäß Fig. 1 sind mittels Pfeilen die Durchströmung und die Durchströmrichtung des Mediums angedeutet.
Ferner ist noch eine Einrichtung 60 zur Notversorgung der Trägerperson mit Sauerstoff, und eine Gebläseeinrichtung 61 zur Bodenversorgung bei stillstehenden Triebwerken vorgesehen.
Außerdem sind in bekannter Weise arbeitende, hier nicht dargestellte Filter zur Sicherung der Trägerperson gegen ABC-Einwirkungen vorgesehen.

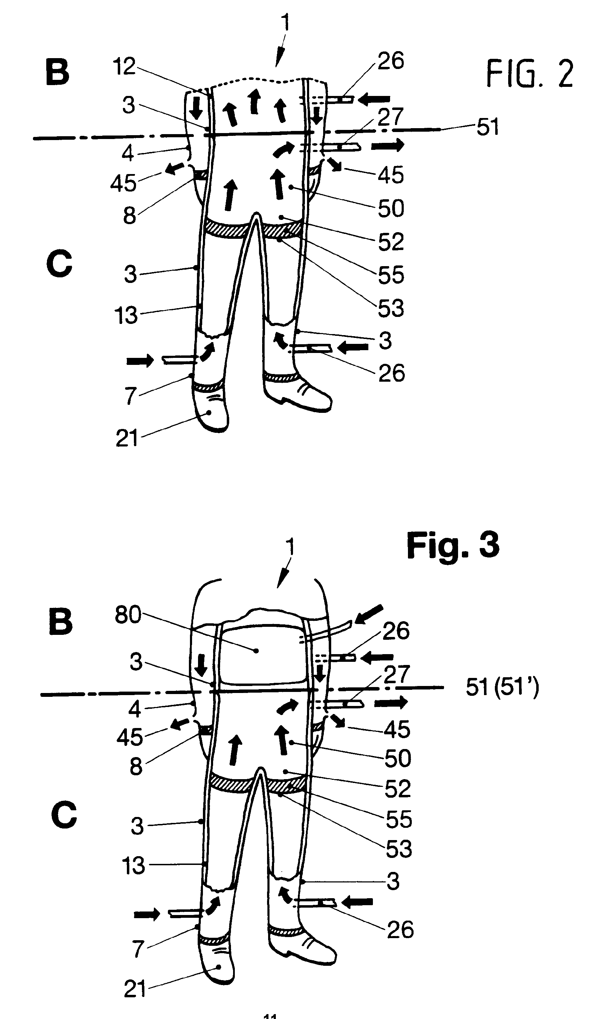

Wie aus Fig. 3 zu erkennen ist, weist bei einer bevorzugten Ausführungsform der Schutzanzug zwar die gleichen Kammern 12 und 13 auf, jedoch sind bei dieser Ausführung nur Zuleitungen 26 zu den Kammern 12 bzw. 13 und keine Auslaßleitungen vorgesehen, so daß innerhalb der Druckbereiche B bzw. C unabhängig voneinander ein den Piloten bei hohen Beschleunigungswerten schützender Druck in den Kammern 12 bzw. 13 aufgebaut werden kann.

Ferner ist bei dem gezeigten Ausführungsbeispiel, zusätzlich zum Druckbereich B eine den Brustkorb der Trägerperson umschließende zusätzliche Druckweste bzw. Druckblase 80 vorgesehen. Die Druckweste 80 arbeitet mit Bezug auf die Druckhöhe unabhängig vom Druck in der Kammer 12 des Druckbereiches B bzw. vom Druck in den Armteilen 4.

Die Arbeitsweise des Schutzanzugsystems ist wie nachfolgend erläutert.

Erfindungsgemäß sind die einzelnen mit A, B und C bezeichneten Durchström- bzw. Druckbereiche des gesamten Schutzanzuges 1 betreffend den Helmbereich A, den Oberkörperbereich B einschließlich der Armteile 4 und den Unterkörperbereich C von den Schuhen 21 bis etwa zur Gürtellinie 51 in bezug auf die Durchströmung bzw. in bezug auf Druckaufbau bzw. die Druckverhältnisse vollkommen voneinander getrennt und unterschiedlich.

Der Bereich A schließt die Regelung der Atemgaszuführung zum Innenraum 10 des Integralhelms 2, die Durchströmung des Helminnenraumes 10 zur Wärme- und Feuchtigkeitsregulierung und zur Einstellung vorgegebener Druckverhältnisse in Abhängigkeit von der Höhe des Druckes außerhalb des Schutzanzuges 1 bzw. außerhalb des Helms ein.

Zur Vermeidung der Abhängigkeit von mitzuführendem Atemgas, wird die von den Triebwerken 66 abgezapfte Luft unter Zwischenschaltung des an Bord mitgeführten Oxygen-Generierungssystems 28 bekannter Bauart und des Leitungskupplungselements 24 dem Innenraum 10 des Helmes 2 zugeführt. Über den Durchflußregler 38, sowie die Auslaßventile 39 bzw. 41 wird die Atemgasmenge, der Druck sowie die Klimatisierung mittels der Durchströmung des Helminnenraumes 10 bestimmt bzw. bewirkt.

Die Durchströmung des Helminnenraumes 10 ist vollständig getrennt und damit unabhängig von der Durchströmung der Kammern 12 bzw. 13 des Schutzanzuges 1.

Infolge der getrennten und unabhängig voneinander arbeitenden Durchströmbereiche bzw. Druckbereiche B und C werden die voneinander getrennten Kammern 12 bzw. 13 des Schutzanzuges von der Triebwerksabzapfluft unter Klimatisierung mittels des Klimasystems 64 durchströmt.
Die Abzapfluft wird der Kammer 12 über die Zuleitung 26 zugeführt und für den Fall der Durchströmung über die Leitung 27 zum Klimasystem 64 zurückgeleitet.

Die Einleitung der Abzapfluft für das Anzugoberteil, das heißt des Bereichs B, erfolgt dabei in dessen unterer Zone und entsprechend die Rückführung in der oberen Zone des Anzugoberteils, wie in der Zeichnung durch Strömungpfeile angedeutet. Dabei werden die Anzugarmteile 4 bzw. deren Kammern 12, die mit der Kammer 12 des Anzugoberteils identisch sind, von der oberen Zone des Bereichs B ausgehend bis zu den Abschlußmanschetten 8 der Armteile 4 zu den Drosselöffnungen 45 der Kammern 12 hin durchströmt. Der die Luftzu- und die Luftrückführungsleitungen 26 bzw. 27 enthaltende Regler 31 regelt den temperierten Konstantdurchfluß im Bereich B des Anzuges 1.

Bei dem gegenüber dem Bereich B selbständigen, den getrennt arbeitenden Anzugunterteil einschließenden Bereich C wird über die Zuleitung 26 im Fußbereich des Anzuges den Kammern 13 Abzapfluft zugeleitet, die unterhalb der Gürteillinie 51 des Anzuges 1 über die Rückführungsleitung 27 zurück zum Klimasystem abströmen kann. Dabei wird Menge und bzw. oder Druck des Durchströmmediums mittels des Ventils 32 geregelt.

Die Trennung der Durchström- bzw. Druckbereiche des Schutzanzuges 1 wird bewirkt mittels des Hosenteils 50, welches im Bereich der Anzuggürtellinie 51 (strichpunktiert) mit einer druckdichten Naht 5; 51˝ an der Innenseite der Anzugaußenhülle 3 befestigt ist und deren Beinteile 7 mit Hilfe der an den Oberschenkeln der Trägerperson abdichtend anliegenden Manschetten 55.
Das Hosenteil 50 ist aus druckdichtem Gewebe gebildet, wobei zwischen dem Körper der Trägerperson und dem Hosenteil 50 ein Zwischenraum gebildet sein kann.

Mittels der Gebläseeinrichtung 61 ist die Versorgung des Helminnenraumes 10 in Verbindung mit einer Anlage 60 zur Notversorgung bzw. zur hilfsweisen Versorgung der Trägerperson mit Atemgas vorgesehen.
Der Helm 2 kann zweckmäßig innen mit schockabsorbierendem Material in Verbindung mit Kühlkanälen versehen sein.

Zwischen der Anzugaußenhülle 3 und dem Körper der Trägerperson ist die Anordnung einer Gewebehülle (Textileinlage) in der Art von Klimaunterwäsche zum Transport der Körperschweißes von der Körperoberfläche weg, vorgesehen.
Der Anzug 1 wird somit durchströmt zwischen beiden Schichten mit klimatisierter Luft, die die vom Körper abgegebene Wärme und Feuchtigkeit aufnimmt und abführt.
Ebenso wird der Wärmestrom, der aus der Umgebung durch Strahlung und konvektive Wärmeübertragung dem Körper zugeführt wird, absorbiert.
Wärmeübertragung und damit die Richtung der Wärmeströme ist abhängig vom thermodynamischen Zustand des strömenden Fluids und von den Umgebungsbedingungen und wird über das Fluid zur Mikroklimatisierung des Körpers der Trägerperson geregelt. Eine direkte Wechselwirkung zwischen Körper und Umgebung ist nicht vorhanden, da der Luftstrom ein körpernahes Mikroklima bildet, das Körper und Umgebung trennt.

Durch Erhöhung des statischen Druckes in der Luftschicht gegenüber dem Umgebungsdruck kann eine Verengung der Gefäße im Unterkörper der Trägerperson und damit Schutz bei Beschleunigungslasten erreicht werden. Eine Druckerhöhung innerhalb des gesamten Anzuges ist notwendig, wenn der Druck des Atemgases gegenüber dem Umgebungsdruck erhöht wird, um eine ausreichende Atemgasversorgung in großen Flughöhen sicherzustellen. Um die Atmung bei Beschleunigungslasten zu unterstützen, wird der Oberörper durch einen Teildruck abgestützt, der dem Druck des Atemgases entspricht.
Dazu sieht die weitere Ausführungsform gemäß Fig. 3 eine im Druckbereich B des Schutzanzuges 1 zusätzlich angeordnete, mit dem Atemgassystem gekoppelte Druckweste 80 vorgesehen, die den Rippenbereich bzw. den Brustbereich der Trägerperson umschließt. Durch die Koppelung des Druckes vor Mund und Nase der Trägerperson und im Bereich der Druckweste 80 ist die Trägerperson gegen Auswirkungen von hohen G-Belastungen ausreichend gesichert.

## Patentansprüche

1. Schutzanzugsystem für Piloten von Luft- bzw. Raumfahrzeugen oder für Fahrer von Bodenfahrzeugen, insbesondere für hohe Beschleunigungen, mit einem zwischen dem Körper der Trägerperson und der Schutzanzughülle befindlichen Zwischenraum, der in mindestens zwei voneinander getrennte Bereiche mit voneinander getrennten Kammern unterteilt ist, wobei die Kammern voneinander getrennt über Zuleitungen an eine Einrichtung zur Lieferung eines gasförmigen Mediums anschließbar sind und wobei in die Zuleitungen getrennt und unabhängig voneinander arbeitende Regler eingesetzt sind,
**dadurch gekennzeichnet,**
daß für die wahlweise Durchströmung der Bereiche (A, B, C) des Schutzanzuges (1) Zuleitungen (26) und Rückleitungen (27) über die Regler (30, 31, 32) zur Druckbeaufschlagung bzw. Durchströmung der Kammern (10, 12, 13) vorgesehen sind.

2. Schutzanzugsystem nach Anspruch 1, **dadurch gekennzeichnet,** daß in die Zuleitung (26) bzw. in die Rückleitung (27) Regelelemente (30; 31; 32) für die Regelung des Druckes und bzw. oder der Durchströmung der Kammern (10; 12; 13) vorgesehen sind.

3. Schutzanzugsystem nach Anspruch 1 oder 2, **dadurch gekennzeichnet**, daß einer der Bereiche (B) den Schutzanzugoberteil mit den Anzugarmteilen (4) und ein anderer Bereich (C) den Schutzanzugunterteil mit den Anzugbeinteilen (7; 21) einschließt.

4. Schutzanzugsystem nach mindestens einem der vorangehenden Ansprüche, **dadurch gekennzeichnet,** daß der Innenraum (10) des Schutzhelms der Trägerperson einen Druckbereich (A) bildet, der wahlweise mit den Bereichen (B; C) des Schutzanzuges (1) getrennt und unabhängig gegenüber den Kammern (12; 13) oder gemeinsam mit den Kammern (12; 13) des Schutzanzuges (1) anschließbar ist.

5. Schutzanzugsystem nach mindestens einem der vorangehenden Ansprüche, **dadurch gekennzeichnet,** daß jedem der Durchström- bzw. Druckbereiche (A; B; C) voneinander getrennt und unabhängig arbeitende Regeleinrichtung (25; 30; 31; 32) zugeordnet sind.

6. Schutzanzugsystem nach mindestens einem der vorangehenden Ansprüche, **dadurch gekennzeichnet,** daß die Regeleinrichtungen (30; 31; 32) Druckregeleinrichtung sind.

7. Schutzanzugsystem nach mindestens einem der vorangehenden Ansprüche, **dadurch gekennzeichnet,** daß für die Durchströmung der Bereiche (A; B; C) des Schutzanzuges (1) Atemgas verwendet wird.

8. Schutzanzugsystem nach mindestens einem der vorangehenden Ansprüche, **dadurch gekennzeichnet**, daß für den Druckaufbau bzw. für die Durchströmung der Kammern (10; 12; 13) der Druckbereiche (A; B; C) dem Atemgas unter Zwischenschaltung einer an sich bekannten "On Board Oxygen Generating System' oder unmittelbar Zapfluft von Triebwerken (66) zugeleitet wird.

9. Schutzanzugsystem nach mindestens einem der vorangehenden Ansprüche, **dadurch gekennzeichnet,** daß in die Kammern (12; 13) zwischen der Schutzanzugaußenhülle (3) und der Trägerperson eine innere, wasserdampfdurchlässige Textilschicht eingesetzt ist.

10. Schutzanzugsystem nach mindestens einem der vorangehenden Ansprüche, **dadurch gekennzeichnet**, daß zwischen den Kammern (10; 12; 13) und der Zu- bzw. Rückleitung (26; 27) eine Klimatisierungseinrichtung (64) für das Durchströmmedium vorgesehen ist.

11. Schutzanzugsystem nach mindestens einem der vorangehenden Ansprüche, **dadurch** **gekennzeichnet,** daß für die Trennung der Druckbereiche (B; C) des Schutzanzuges (1) und des Helminnenraumes (10) zwischen dem Helm (2) und dem Anzug (1) eine, flexible Bewegungen des Kopfes der Trägerperson zulassende Dichtmanschette (6) angeordnet ist.

12. Schutzanzugsystem nach mindestens einem der vorangehenden Ansprüche, **dadurch gekennzeichnet**, daß zur Trennung der Druckbereiche (B; C) des Schutzanzuges (1) ein Hosenteil (50) mit einem etwa in der Gürtellinie (51') des Anzuges druckdicht an der Innenseite der Anzugaußenhülle (3) befestigten Hosenbund (51) und an den Hosenbeinteilen (52) befestigten Abschlußdichtmanschetten (55) für die abdichtende Anlage an den Oberschenkeln der Trägerperson vorgesehen ist.

13. Schutzanzugsystem nach mindestens einem der vorangehenden Ansprüche, **dadurch gekennzeichnet,** daß die Zuleitung (26) des Durchströmmediums in die Kammem (12; 13) der Druckbereiche (B; C) jeweils im unteren und die Rückleitung (27) jeweils im oberen Abschnitt der Bereiche (B; C) oder umgekehrt erfolgt.

14. Schutzanzugsystem nach mindestens einem der vorangehenden Ansprüche, **dadurch gekennzeichnet**, daß zur Versorgung am Boden eine an die Zuleitung (26) zu den Kammem (10; 12; 13) des Anzuges (1) anschließende Gebläseeinrichtung (61) vorgesehen ist.

15. Schutzanzugsystem nach mindestens einem der vorangehenden Ansprüche, **dadurch gekennzeichnet**, daß ein an die Zuleitung (26) zu den Kammern (10; 12; 13) des Anzuges (1) automatisch anschließbarer Not-Sauerstoff-Erzeuger (60) vorgesehen ist.

16. Schutzanzugsystem nach mindestens einem der vorangehenden Ansprüche, **dadurch gekennzeichnet**, daß die Kammem (12; 13) des mittleren Bereichs (B) (Brustbereich) und bzw. oder des unteren Bereichs (C) (Unterkörperbereich) für einen geregelten Druckaufbau an die Zuleitungen (26) angeschlossen und in sich abgeschlossen ausgebildet sind.

17. Schutzanzugsystem nach mindestens einem der vorangehenden Ansprüche, **dadurch gekennzeichnet,** daß zusätzlich zur Druckbeaufschlagung des mittleren Bereichs (B) bzw. der Kammer (12) eine getrennt vom Druck in der Kammer (12) beaufschlagbare Druckweste (80) (Druckblase) für die Beeinflussung des Brustbereichs bzw. Rippenbereichs der Trägerperson vorgesehen ist.

18. Schutzanzugsystem nach mindestens einem der vorangehenden Ansprüche, **dadurch gekennzeichnet,** daß unabhängig von der Beaufschlagung der Druckweste (80) die Kammer (12) des zugeordneten Druckbereichs (B) getrennt beaufschlagbar vorgesehen ist.

## Claims

1. Protective suit system for pilots of aircraft or space vehicles, or for the drivers of ground vehicles, in particular for high accelerations, comprising an intermediate space, which is placed between the body of the wearer and the protective suit shell and which is divided into at least two regions which are separated from each other which have chambers which are separated from each other, in which respect the chambers are separately connectible via supply lines to a device for feeding a gaseous medium, and that regulators which operate independently from each other are inserted into the supply lines, **characterised in that** supply lines (26) and feedback lines (27) are provided via regulators (30, 31, 32) for pressurizing or throughflow of the chambers (10, 12, 13) for selective throughflow of the areas (A, B, C) of the protective suit (1).

2. Protective suit system according to claim 1, **characterised in that** regulator elements (30; 31; 32) for regulation of pressure and/or throughflow through the chambers (10; 12; 13) are provided in the supply line (26) or in the feedback line (27).

3. Protective suit system according to claim 1 or 2, **characterised** **in that** one of the areas B) incorporates the top section of the protective suit with the suit's arm sections (4), and another area (C) incorporates the bottom section of the protective suit with the suit's leg sections (7; 21).

4. Protective suit system according to at least one of the above claims, **characterised in that** the interior space (10) of the protective helmet of the wearer establishes a pressure area (A) which is connectible to the areas (B; C) of the protective suit (1) selectively either separate and independent from the chambers (12; 13) or together with the chambers (12; 13) of the protective suit (1).

5. Protective suit system according to at least one of the above claims, **characterised in that** each throughflow or pressure area (A; B; C) is associated with a regulating device (25; 30; 31; 32) which operates separately and independently.

6. Protective suit system according to at least one of the above claims, **characterised in that** the regulating devices (30; 31, 32) are pressure-control devices.

7. Protective suit system according to at least one of the above claims, **characterised in that** breathable gas is used for flowing through the areas (A; B; C) of the protective suit (1).

8. Protective suit system according to at least one of the above claims, **characterised in that** the breathable gas is fed tapped air from engines (66), either with a conventional on-board oxygen generating system connected thereinbetween or directly, for the purpose of pressure buildup or throughflow of the chambers (10; 12; 13) of the pressure areas (A; B; C).

9. Protective suit system according to at least one of the above claims, **characterised** **in that** an inner water-vapour permeable textile layer is inserted into the chambers (12; 13) between the outer shell of the protective suit (3) and the wearer.

10. Protective suit system according to at least one of the above claims, **characterised in that** an air-conditioning device (64) for the throughflow medium is provided between the chambers (10; 12; 13) and the supply or feedback line (26; 27).

11. Protective suit system according to at least one of the above claims, **characterised in that** a sealing sleeve (6) which permits flexible head movements of the wearer is arranged between the helmet (2) and the suit (1) for the purpose of separating the pressure areas (B; C) of the protective suit (1) and of the inner area of the helmet (10).

12. Protective suit system according to at least one of the above claims, **characterised in that,** for the purpose of separating the pressure areas (B; C) of the protective suit (1), provision is made for a trouser section (50) with a trouser belt (51), which is attached in a pressure-tight manner to the inside of the suit's outer shell (3) approximately along the belt line (51') of the suit, and end sealing collars (55) attached to the trouser leg sections (52) for a sealing abutment on the thighs of the wearer.

13. Protective suit system according to at least one of the above claims, **characterised in that** the supply line (26) of the throughflow medium into the chambers (12; 13) of the pressure areas (B; C) is respectively in the lower region of the areas (B; C), and the feedback line (26) respectively in the upper region of the areas (B; C), or vice versa.

14. Protective suit system according to at least one of the above claims, **characterised** **in that** a blower system (61) is provided, which is connectible to the supply line (26) of the chambers (10; 12; 13) of the suit (1) to facilitate supply on the ground.

15. Protective suit system according to at least one of the above claims, **characterised in that** provision is made for an emergency oxygen generator (60) which is automatically connected to the supply line (26) of the chambers (10; 12; 13) of the suit (1).

16. Protective suit system according to at least one of the above claims, **characterised in that** the chambers (12; 13) of the middle area (B)(chest area) and/or of the lower area (C)(lower body area) are connected to the supply lines (26) and self-contained for controlled pressure buildup.

17. Protective suit system according to at least one of the above claims, **characterised in that,** in addition to pressure loading of the middle area (B) or the chamber (12), a pressure vest (80)(pressure bubble), which is loaded separately from the pressure in the chamber (12), is provided to affect the chest area or the rib area of the wearer.

18. Protective suit system according to at least one of the above claims, **characterised in that** the chamber (12) of the associated pressure area (B) is arranged to be loadable separately and independently from loading the pressure vest (80).

## Revendications

1. Système de vêtement de protection pour des pilotes d'aéronefs et de spationefs ou pour des pilotes de véhicules terrestres, en particulier pour des accélérations élevées comportant entre le corps de l'utilisateur qui le porte et l'enveloppe du vêtement un espace qui est divisé en au moins deux zones séparées l'une de l'autre avec des chambres distinctes, les chambres étant raccordées séparément par des conduites d'alimentation à un dispositif de fourniture d'un milieu gazeux et des dispositifs de réglage distincts qui fonctionnent de manière indépendante étant montés dans les conduites d'alimentation, caractérisé par le fait qu'il est prévu pour alimenter de manière sélective les zones (A, B, C) du vêtement de protection (1) des conduites d'alimentation (26) et de retour (27) qui passent par les dispositifs de réglage (30, 31, 32) aux fins d'appliquer une pression et de créer une circulation dans les chambres (10, 12, 13).

2. Système de vêtement de protection selon la revendication 1, caractérisé par le fait qu'il est prévu dans la conduite d'alimentation (26) et dans la conduite de retour (27) des organes de réglages (30, 31, 32) pour régler la pression et/ou la circulation dans les chambres (10, 12, 13).

3. Système de vêtement de protection selon la revendication 1 ou 2, caractérisé par le fait que l'une des zones (B) comprend la partie supérieure du vêtement de protection avec les manches (4) et une autre zone (C) comprend la partie inférieure dudit vêtement de protection avec les jambes (7, 21).

4. Système de vêtement de protection selon l'une au moins des revendications précédentes, caractérisé par le fait que le volume intérieur (10) du casque de l'utilisateur constitue une zone pressurisée (A) qui, avec les zones (B, C) du vêtement de protection (1), peut être raccordée au choix séparément et de manière indépendante des chambres (12, 13) ou avec les chambres (12, 13) du vêtement de protection (1).

5. Système de vêtement de protection selon l'une au moins des revendications précédentes, caractérisé par le fait qu'à chaque zone de circulation ou de pression (A, B, C) sont associées des dispositifs de réglage (25, 30, 31, 32) distincts qui travaillent indépendamment les uns des autres.

6. Système de vêtement de protection selon l'une au moins des revendications précédentes, caractérisé par le fait que les dispositifs de réglage (30, 31, 32) sont des dispositifs de réglage de pression.

7. Système de vêtement de protection selon l'une au moins des revendications précédentes, caractérisé par le fait que l'on utilise pour le balayage des zones (A, B, C) du vêtement de protection (1) un gaz respiratoire.

8. Système de vêtement de protection selon l'une au moins des revendications précédentes, caractérisé par le fait que pour établir la pression ou la circulation dans les chambres (10, 12, 13) des zones de pression (A; B; C) on injecte dans le gaz respiratoire, par l'intermédiaire d'un système de génération d'oxygène embarqué (On Board Oxygen Generating System) connu en soi ou directement de l'air provenant de propulseurs (66).

9. Système de vêtement de protection selon l'une au moins des revendications précédentes, caractérisé par le fait qu'une couche textile intérieure perméable à la vapeur d'eau est placée dans les chambres (12, 13) entre l'enveloppe extérieure (3) du vêtement de protection et l'utilisateur.

10. Système de vêtement de protection selon l'une au moins des revendications précédentes, caractérisé par le fait qu'il est prévu entre les chambres (10, 12, 13) et la conduite d'alimentation ou de retour (26, 27) un dispositif de climatisation (64) pour le fluide de circulation.

11. Système de vêtement de protection selon l'une au moins des revendications précédentes, caractérisé par le fait que pour séparer les zones de pression (B, C) du vêtement de protection (1) et du volume intérieur du casque (10), un manchon d'étanchéité (6) flexible autorisant les mouvements de la tête de la personne est disposé entre le casque (2) et le vêtement (1).

12. Système de vêtement de protection selon l'une au moins des revendications précédentes, caractérisé par le fait qu'il est prévu pour séparer les zones de pression (B, C) du vêtement de protection (1), une partie pantalon (50) avec sensiblement au niveau de la ceinture (51') un lien (51) fixé de manière étanche à la pression sur la face intérieure de l'enveloppe extérieure du vêtement (3) et au niveau des jambes (52) du pantalon des manchons d'étanchéité (55) qui sont appliqués de manière étanche sur les cuisses de l'utilisateur.

13. Système de vêtement de protection selon l'une au moins des revendications précédentes, caractérisé par le fait que l'alimentation (26) en fluide de circulation des chambres (12, 13) des zones de pression (B, C) et le retour (27) de celui-ci ont lieu respectivement dans la partie inférieure et la partie supérieure des zones (B, C) ou inversement.

14. Système de vêtement de protection selon l'une au moins des revendications précédentes, caractérisé par le fait qu'il est prévu pour l'alimentation à la base un système de soufflante (61) qui est connecté à la conduite d'alimentation (26) des chambres (10, 12, 13) du vêtement de protection (1).

15. Système de vêtement de protection selon l'une au moins des revendications précédentes, caractérisé par le fait qu'il est prévu un générateur de secours d'oxygène (60) qui peut être connecté de manière automatique à la conduite d'alimentation (26) des chambres (10, 12, 13) du vêtement de protection (1).

16. Système de vêtement de protection selon l'une au moins des revendications précédentes, caractérisé par le fait que les chambres (12, 13) de la zone médiane (B) (poitrine) et/ou de la zone inférieure (C) (partie inférieure du corps) sont connectées aux conduites d'alimentation (26) pour établir une pression contrôlée et sont fermées en elles-mêmes.

17. Système de vêtement de protection selon l'une au moins des revendications précédentes, caractérisé par le fait qu'il est prévu en outre pour établir une pression dans la zone médiane (B) ou dans la chambre (12) une veste (80) gonflable indépendamment de la pression régnant dans la chambre (12) aux fins d'agir sur la zone de la poitrine ou des côtes de l'utilisateur.

18. Système de vêtement de protection selon l'une au moins des revendications précédentes, caractérisé par le fait que la chambre (12) de la zone (B) concernée peut être alimentée indépendamment de la veste (80) gonflable.
